# EUROPÄISCHE PATENTANMELDUNG

(11) **EP 4 818 417 A1**
(43) Veröffentlichungstag der Anmeldung: **07.10.2026**
(21) Anmeldenummer: 26168142.3
(22) Anmeldetag: 26.03.2026
(51) Int. Cl.: E02F 9/16, E02F 9/20, B60N 2/75

(54) **BAUMASCHINE MIT EINER SITZKONSOLE**

(30) Priorität: 31.03.2025 AT 5002825 U
(71) Anmelder: Wacker Neuson Linz GmbH, 4063 Hörsching (AT)
(72) Erfinder: Falzberger, Markus, 4070 Pupping (AT); Höftberger, Matthäus, 4760 Raab (AT)
(74) Vertreter: Hübscher & Partner Patentanwälte GmbH

(57) **Zusammenfassung**

Es wird eine Baumaschine (1) mit einer Sitzkonsole (2), der wenigstens ein Steuerhebelträger (3) zugeordnet ist beschrieben und mit einem Motor (4) zum Antreiben eines Fahrantriebs (5) und/oder einer Arbeitshydraulik (6), wobei der wenigstens eine Steuerhebelträger (3) um eine baumaschinenhochachsenparallele Schwenkachse (7) schwenkverstellbar auf der Sitzkonsole (2) gelagert ist. Um vorteilhafte Konstruktionsbedingungen zu schaffen, wird vorgeschlagen, dass der Steuerhebelträger (3) in seiner Basis (8) mit radialem Abstand zur Schwenkachse (7) wenigstens eine Versorgungsleitungsdurchführung (9, 9') aufweist und dass der Steuerhebelträger (3) wenigstens in seinen Schwenkendlagen mit einer Schwenksicherung arretierbar ist.

## Beschreibung

Die Erfindung bezieht sich auf eine Baumaschine mit einer Sitzkonsole, der wenigstens ein Steuerhebelträger zugeordnet ist und mit einem Motor zum Antreiben eines Fahrantriebs und/oder einer Arbeitshydraulik, wobei der wenigstens eine Steuerhebelträger um eine baumaschinenhochachsenparallele Schwenkachse schwenkverstellbar auf der Sitzkonsole gelagert ist.

Solche Baumaschinen, insbesondere kleine Kompaktbagger, welche vorwiegend für Innenabbrüche verwendet werden, benötigen eine sehr geringe Durchfahrtsbreite, um Türen problemlos passieren zu können. Dies bedingt geringe Baubreiten, also ein geringes Lichtmaß der Baumaschine, was sich allerdings negativ auf den Komfort des Fahrers auswirkt. Um eine geringe Durchfahrtsbreite zu erzielen und den Komfort des Fahrers zu gewährleisten, kann die Position der Steuerhebelträger verstellbar sein. Die Verstellung soll ohne großen Aufwand und ohne Zuhilfenahme von Werkzeugen möglich sein. Dazu ist es bekannt (EP4219842A1), den Steuerhebelträger um eine baumaschinenhochachsenparallele Schwenkachse schwenkverstellbar auf der Sitzkonsole zu lagern. Der Steuerhebelträger ist zudem über eine horizontale Achse klappbar sind um ein Aufsteigen des Maschinenführers in den Fahrzeugraum zu vereinfachen. Nachteilig an diesem bekannten Stand der Technik ist allerdings die Versorgungsleitungsführung in den Steuerhebelträger zu den einzelnen Bedienelementen am Steuerhebelträger.

Der Erfindung liegt somit die Aufgabe zugrunde, eine Baumaschine der eingangsgeschilderten Art zu schaffen, bei der eine verbesserte Versorgungsleitungsführung sichergestellt ist. Die Versorgungsleitungen sollen insbesondere in der Versorgungsleitungsführung bestmöglich vor Beschädigungen geschützt sein.

Die Erfindung löst die gestellte Aufgabe dadurch, dass der Steuerhebelträger in seiner Basis mit radialem Abstand zur Schwenkachse wenigstens eine Versorgungsleitungsdurchführung aufweist und dass der Steuerhebelträger wenigstens in seinen Schwenkendlagen mit einer Schwenksicherung arretierbar ist.

Damit wird eine verbesserte Versorgungsleitungsführung von der Baumaschine in den oder die Steuerhebelträger sichergestellt, bei der die Versorgungsleitungen in den zugeordneten Versorgungsleitungsführungen bestmöglich vor Beschädigungen geschützt sind, da sie im Steuerhebelträger abgeschirmt sind. Damit der Steuerhebelträger um eine baumaschinenhochachsenparallele Schwenkachse schwenkverstellbar auf der Sitzkonsole gelagert werden kann besteht die Möglichkeit Bolzen-Buchsenpaarung mit vertikaler Drehachse zwischen Steuerhebelträger und Sitzkonsole vorzusehen. Damit kann die Sitzkonsole entlang eines Kreisbogens zwischen einer in die Baumaschine eingeschwenkten Durchfahrtsstellung, in der beispielsweise enge Durchfahrten passiert werden können, und einer ausgeschwenkten Arbeitsstellung, in der der Bedienkomfort für die Bedienperson gewährleistet ist, in einer im Wesentlichen horizontalen Ebene verlagert werden.

Ist zwischen der Basis des Steuerhebelträgers und der Sitzkonsole eine Gleitplatte zum Anschluss des Steuerhebelträgers an die Sitzkonsole vorgesehen, so dämpft diese Gleitplatte Vibrationen der Baumaschine und leitet diese nur gedämpft in den Steuerhebelträger ein, womit der Fahrkomfort verbessert wird. Die Sitzkonsole liegt vorzugsweise vertikal spielfrei auf der Gleitplatte auf. Die Gleitplatte besteht vorzugsweise aus Polyethylen.

Weist der Steuerhebelträger in seiner Basis mit radialem Abstand zur Schwenkachse wenigstens zwei radial beabstandete Versorgungsleitungsdurchführungen auf, so können Hydraulikleitungen und elektrische Leitungen ohne gegenseitige Beeinflussung in gesonderten Versorgungsleitungsdurchführungen geführt werden. Insbesondere pulsierende Hydraulikleitungen könnten nach längerem Betrieb elektrische Leitungen aufscheuern.

Ein besonders einfacher und robuster Schwenkanschlag für den Steuerhebelträger kann realisiert werden, wenn zwischen den zwei radial beabstandeten Versorgungsleitungsdurchführung der Gleitplatte eine Einschnürung vorgesehen ist, die zusammen mit einem dazwischen angeordneten Anschlag, der vom Steuerhebelträger nach unten abragt, die Schwenkendlagen begrenzt.

Dem Steuerhebelträger kann ein Riegel zugeordnet sein, der zum Arretieren einer Schwenklage in wenigstens eine, ein Gegenstück für den Riegel bildende Falle an der Gleitplatte einrastbar ist.

Ist die Versorgungsleitungsdurchführung zwischen dem Riegel und der Schwenkachse am Steuerhebelträger angeordnet, bewirkt dies, dass der Steuerhebelträger in der Schwenkebene sauber festgelegt ist und kaum schwingungserregt werden kann. Mittels eines federvorgespannten Rastriegels welcher sich in Fahrtrichtung gesehen vor der Schwenkachse des Steuerhebelträgers befindet, kann eine werkzeuglose Bedienung sichergestellt werden.

Aus Komfortgründen kann der Steuerhebelträger auf seiner Basis um eine baumaschinenquerachsenparallele Achse zwischen einer auf der Sitzkonsole aufruhenden Arbeitslage und einer aufgekippten, von der Sitzkonsole abgehobenen Einstiegslage verlagerbar sein.

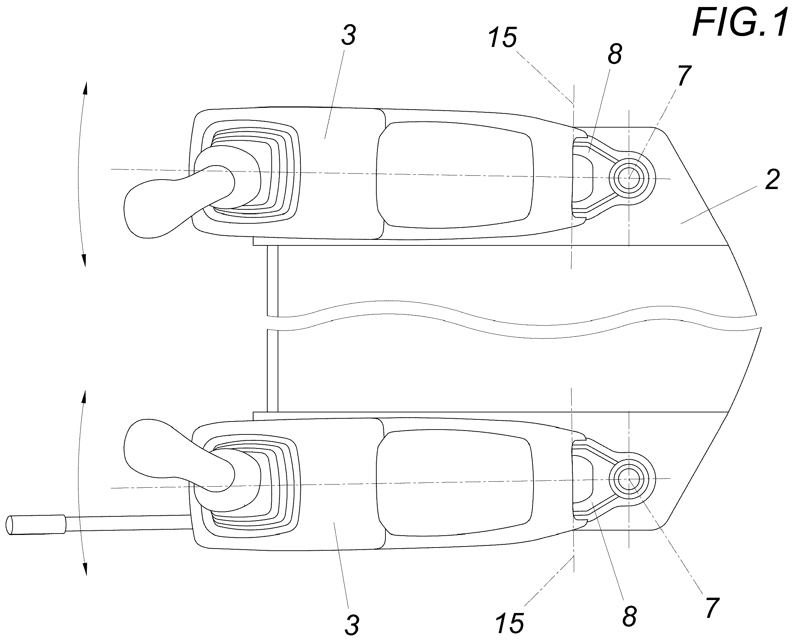

In der Zeichnung ist der Erfindungsgegenstand beispielsweise dargestellt. Es zeigen
- Fig. 1: eine Sitzkonsole einer Baumaschine in Draufsicht,

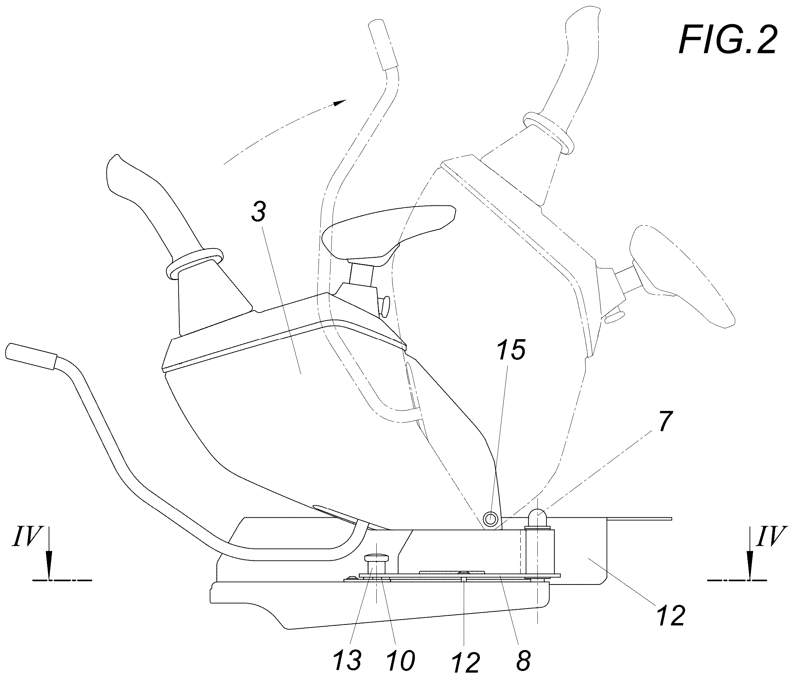

- Fig. 2: die Sitzkonsole aus Fig. 1 in Seitenansicht,
- Fig. 3: die Basis des Steuerhebelträgers und die zugeordnete Gleitplatte in einer explosionsartigen Schrägansicht,

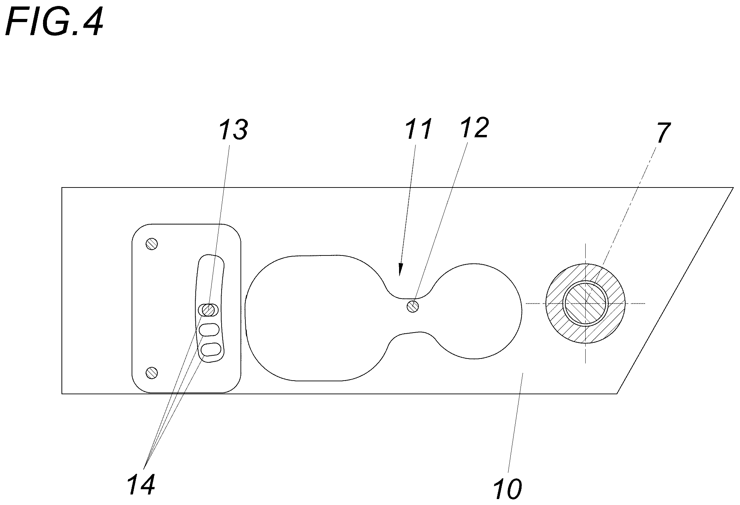

- Fig. 4: eine Draufsicht auf die Gleitplatte und

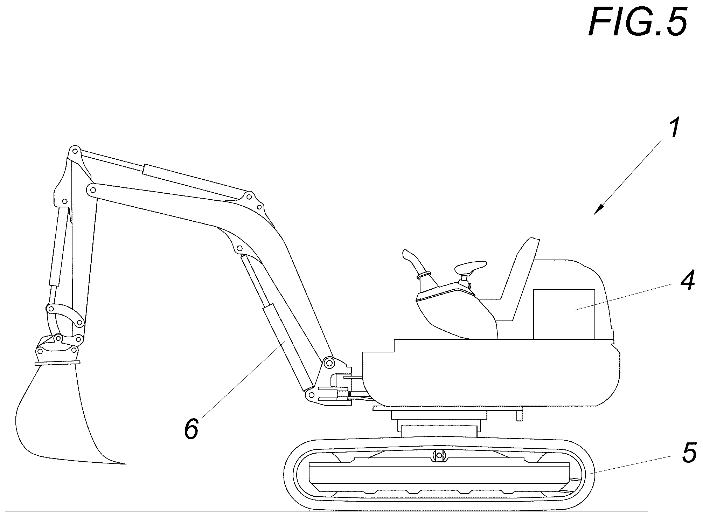

- Fig. 5: eine Baumaschine in Seitenansicht.

Der Sitzkonsole 2 einer Baumaschine 1, insbesondere eines Kompaktbaggers, ist wenigstens ein Steuerhebelträger 3 zugeordnet, über den die Baumaschine gesteuert wird. Im vorliegenden Ausführungsbeispiel ist links und rechts neben einer Freifläche für einen Sitz je ein Steuerhebelträger 3 vorgesehen. Zu diesem Steuerhebelträger führen mehrere hydraulische und elektrische Leitungen. Die Baumaschine ist mit einem Motor 4 zum Antreiben eines Fahrantriebs 5 und/oder einer Arbeitshydraulik 6 ausgestattet. Der wenigstens eine Steuerhebelträger 3 ist um eine baumaschinenhochachsenparallele Schwenkachse 7 schwenkverstellbar auf der Sitzkonsole 2 gelagert, um die Durchfahrtsbreite der Baumaschine bei Bedarf verringern zu können.

Erfindungsgemäß weist der Steuerhebelträger 3 in seiner Basis 8 mit radialem Abstand zur Schwenkachse 7 wenigstens eine Versorgungsleitungsdurchführung 9, 9' auf und ist der Steuerhebelträger 3 wenigstens in seinen Schwenkendlagen mit einer Schwenksicherung arretierbar.

Zwischen der Basis 8 des Steuerhebelträgers 3 und der Sitzkonsole 2 ist eine Gleitplatte 10 zum staubdichten Anschluss des Steuerhebelträgers 4 an die Sitzkonsole 2 vorgesehen.

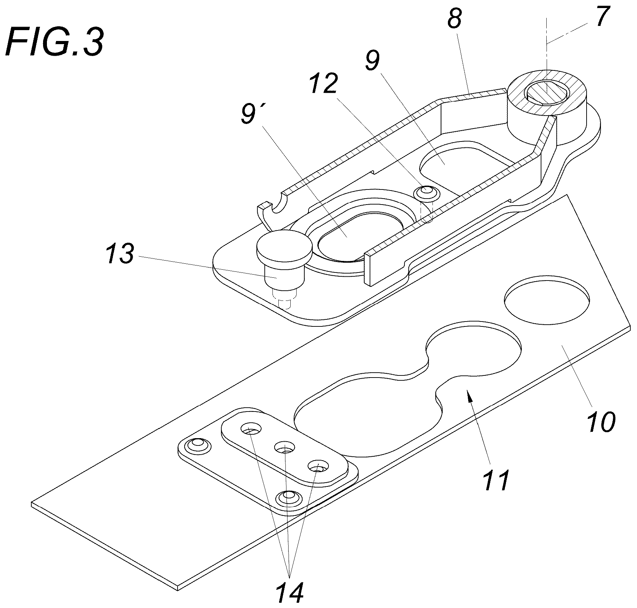

Der Steuerhebelträger 3 weist in seiner Basis 8 mit radialem Abstand zur Schwenkachse 7 wenigstens zwei radial beabstandete Versorgungsleitungsdurchführungen 9, 9' auf. Eine Versorgungsleitungsdurchführung nimmt insbesondere hydraulische und die andere elektrische Leitungen auf. Die entsprechenden, in Fig. 3 insbesondere schlüssellochförmig angeordneten, Durchführungen an der Gleitplatte 10 sind in beiden Schwenkrichtungen entsprechend breiter ausgeführt, um Versorgungsleitungen bei einem Verschwenken des Steuerhebelträgers 3 zu den beiden Endlagen hin nicht zu klemmen bzw. um ein Scheuern der Versorgungsleitungen an der Gleitplatte zu vermeiden. Die Versorgungsleitungsdurchführung 9 kann für Elektrische Leitungen und die Versorgungsleitungsdurchführung 9' für hydraulische Leitungen vorgesehen sein.

Zwischen den zwei radial beabstandeten Versorgungsleitungsdurchführungen 9, 9' der Gleitplatte 10 kann eine Einschnürung 11 vorgesehen sein, die zusammen mit einem dazwischen angeordneten Anschlag 12, der vom Steuerhebelträger 3 nach unten abragt, die Schwenkendlagen begrenzt.

Zur Schwenksicherung kann dem Steuerhebelträger 3 ein Riegel 13 zugeordnet sein, der zum Arretieren einer Schwenklage in wenigstens eine, ein Gegenstück für den Riegel 13 bildende Falle 14 an der Gleitplatte 10 einrastbar ist.

Im Ausführungsbeispiel sind die Versorgungsleitungsdurchführungen 9, 9' zwischen dem Riegel 13 und der Schwenkachse 7 am Steuerhebelträger 3 angeordnet.

Darüber hinaus kann es vorgesehen sein, dass der Steuerhebelträger 3 zusätzlich auf seiner Basis 8 um eine baumaschinenquerachsenparallele Achse 15 zwischen einer auf der Sitzkonsole 2 aufruhenden Arbeitslage und einer aufgekippten, von der Sitzkonsole 2 abgehobenen Einstiegslage verlagerbar ist, um einen Einstieg in die Baumaschine möglichst einfach zu gestalten.

## Patentansprüche

1. Baumaschine (1) mit einer Sitzkonsole (2), der wenigstens ein Steuerhebelträger (3) zugeordnet ist und mit einem Motor (4) zum Antreiben eines Fahrantriebs (5) und/oder einer Arbeitshydraulik (6), wobei der wenigstens eine Steuerhebelträger (3) um eine baumaschinenhochachsenparallele Schwenkachse (7) schwenkverstellbar auf der Sitzkonsole (2) gelagert ist, **dadurch gekennzeichnet, dass** der Steuerhebelträger (3) in seiner Basis (8) mit radialem Abstand zur Schwenkachse (7) wenigstens eine Versorgungsleitungsdurchführung (9, 9') aufweist und dass der Steuerhebelträger (3) wenigstens in seinen Schwenkendlagen mit einer Schwenksicherung arretierbar ist.

2. Baumaschine nach Anspruch 1, **dadurch gekennzeichnet, dass** zwischen der Basis (8) des Steuerhebelträgers (3) und der Sitzkonsole (2) eine Gleitplatte (10 ) zum Anschluss des Steuerhebelträgers (3) an die Sitzkonsole (2) vorgesehen ist.

3. Baumaschine nach Anspruch 1 oder 2, **dadurch gekennzeichnet, dass** der Steuerhebelträger (3) in seiner Basis (8) mit radialem Abstand zur Schwenkachse (7) wenigstens zwei radial beabstandete Versorgungsleitungsdurchführung (9, 9') aufweist.

4. Baumaschine nach einem der Ansprüche 1 bis 3, **dadurch gekennzeichnet, dass** zwischen den zwei radial beabstandeten Versorgungsleitungsdurchführung (9, 9') der Gleitplatte (10) eine Einschnürung (11) vorgesehen ist, die zusammen mit einem dazwischen angeordneten Anschlag (12), der vom Steuerhebelträger (3) nach unten abragt, die Schwenkendlagen begrenzt.

5. Baumaschine nach einem der Ansprüche 1 bis 4, **dadurch gekennzeichnet, dass** dem Steuerhebelträger (3) ein Riegel (13) zugeordnet ist, der zum Arretieren einer Schwenklage in wenigstens eine, ein Gegenstück für den Riegel (13) bildende Falle (14) an der Gleitplatte (10) einrastbar ist.

6. Baumaschine nach Anspruch 5, **dadurch gekennzeichnet, dass** die Versorgungsleitungsdurchführung (9, 9') zwischen dem Riegel (13) und der Schwenkachse (7) am Steuerhebelträger (3) angeordnet ist.

7. Baumaschine nach einem der Ansprüche 1 bis 6, **dadurch gekennzeichnet, dass** der Steuerhebelträger (3) auf seiner Basis (8) um eine baumaschinenquerachsenparallele Achse (15) zwischen einer auf der Sitzkonsole (2) aufruhenden Arbeitslage und einer aufgekippten, von der Sitzkonsole (2) abgehobenen Einstiegslage verlagerbar ist.
